# EUROPÄISCHE PATENTANMELDUNG

(11) **EP 3 567 686 A1**
(43) Veröffentlichungstag der Anmeldung: **13.11.2019**
(21) Anmeldenummer: 18170959.3
(22) Anmeldetag: 07.05.2018
(51) Int. Cl.: H02G 3/00, H02G 3/30, F16B 7/18, H02G 3/32

(54) **MONTAGESTRUKTUR FÜR ZUMINDEST EINE LEITUNG**

(71) Anmelder: HILTI Aktiengesellschaft, 9494 Schaan (LI)
(72) Erfinder: Bragagna, Elio, 6822 Duens (AT); Hermann, Fritz, 9494 Schaan (LI); Carbonare, Martin, 6840 Götzis (AT); Wiedner, Christoph, 6800 Feldkirch (AT); Boenig, Stefan, 88142 Achberg-Esseratsweiler (DE)
(74) Vertreter: Hilti Aktiengesellschaft Corporate Intellectual Property

(57) **Zusammenfassung**

Die Erfindung betrifft eine Montagestruktur für zumindest eine Leitung (91), aufweisend eine linke Vertikalprofilschiene (12), eine rechte Vertikalprofilschiene (13) und zumindest eine Horizontalprofilschiene (14). In einer linken Überlappungszone (2) ragt die Horizontalprofilschiene (14) mit einer ersten Seitenwand (41) und mit einer zweiten Seitenwand (42) zwischen eine erste Seitenwand (21) und eine zweite Seitenwand (22) der linken Vertikalprofilschiene (12). In einer rechten Überlappungszone (3) ragt die Horizontalprofilschiene (14) mit ihrer ersten Seitenwand (41) und mit ihrer zweiten Seitenwand (42) zwischen eine erste Seitenwand (31) und eine zweite Seitenwand (32) der rechten Vertikalprofilschiene (13). Die Horizontalprofilschiene (14) ist in der linken Überlappungszone (2) mit der linken Vertikalprofilschiene (12) und in der rechten Überlappungszone (3) mit der rechten Vertikalprofilschiene (13) verbolzt.

## Beschreibung

Die Erfindung betrifft eine Montagestruktur für zumindest eine Leitung.

Zum Abhängen oder Aufständern von Leitungen sind U-artige oder H-artige Montagestrukturen bekannt, welche jeweils zwei parallel zueinander verlaufende Vertikalprofilschienen und zumindest eine die beiden Vertikalprofilschienen verbindende Horizontalprofilschiene aufweisen, auf welcher die Leitungen aufliegen. Die Vertikalprofilschienen sind mit dem Untergrund oder mit anderen Profilschienen verbunden.

Zum Verbinden der Profilschienen können die Profilschienen als C-Profile ausgebildet werden und die Verbindung kann durch zusätzliche Verbindungselemente hergestellt werden, welche die Schienenlippen der jeweils angrenzenden Schienen hintergreifen. Ein Schienensystem mit C-Profilen wird von der Hilti Aktiengesellschaft unter dem Namen "MQ" vermarktet.

Die WO 2011/028126 A1 zeigt eine direkte Verbindung von einem geschlossenen, mit Dreiecksquerschnitt ausgestatten Profil und einem offenen Profil, wobei eine asymmetrische Lasteinleitung in das geschlossene Profil vorgesehen ist.

Aufgabe der Erfindung ist es, eine besonders einfach und günstig herstellbare, einfach zu montierende und zugleich besonders zuverlässige und tragfähige Montagestruktur anzugeben.

Die Aufgabe wird erfindungsgemäss durch eine Montagestruktur mit den Merkmalen des Anspruchs 1 gelöst. Bevorzugte Ausführungsformen sind in den abhängigen Ansprüchen angegeben.

Eine erfindungsgemässe Montagestruktur für zumindest eine Leitung weist auf:
- eine linke Vertikalprofilschiene,
- eine rechte Vertikalprofilschiene, und
- zumindest eine Horizontalprofilschiene zum Tragen der Leitung, wobei die Horizontalprofilschiene die linke Vertikalprofilschiene und die rechte Vertikalprofilschiene verbindet,
- wobei die linke Vertikalprofilschiene eine erste Seitenwand, eine zweite Seitenwand und einen Boden aufweist, welcher die erste Seitenwand der linken Vertikalprofilschiene und die zweite Seitenwand der linken Vertikalprofilschiene verbindet,
- wobei die rechte Vertikalprofilschiene eine erste Seitenwand, eine zweite Seitenwand und einen Boden aufweist, welcher die erste Seitenwand der rechten Vertikalprofilschiene und die zweite Seitenwand der rechten Vertikalprofilschiene verbindet,
- wobei die Horizontalprofilschiene eine erste Seitenwand, eine zweite Seitenwand und einen Boden aufweist, welcher die erste Seitenwand der Horizontalprofilschiene und die zweite Seitenwand der Horizontalprofilschiene verbindet,
- wobei die Horizontalprofilschiene in einer linken Überlappungszone mit ihrer ersten Seitenwand und mit ihrer zweiten Seitenwand zwischen die erste Seitenwand der linken Vertikalprofilschiene und die zweite Seitenwand der linken Vertikalprofilschiene ragt und in der linken Überlappungszone mit der linken Vertikalprofilschiene verbolzt ist, und
- wobei die Horizontalprofilschiene in einer rechten Überlappungszone mit ihrer ersten Seitenwand und mit ihrer zweiten Seitenwand zwischen die erste Seitenwand der rechten Vertikalprofilschiene und die zweite Seitenwand der rechten Vertikalprofilschiene ragt und in der rechten Überlappungszone mit der rechten Vertikalprofilschiene verbolzt ist.

Erste Grundgedanken der Erfindung können darin gesehen werden, die beiden Vertikalprofilschienen der Montagestruktur jeweils mit einem U-Profilbereich auszustatten, welcher breiter ist als die Horizontalprofilschiene, die gegenüberliegenden Enden der Horizontalprofilschiene im Inneren der beiden U-Profilbereiche anzuordnen, so dass die gegenüberliegenden Enden der Horizontalprofilschiene jeweils von einem U-Profilbereich umgriffen werden, und die Profilschienen in den umgriffenen Bereichen mittels Bolzen zu verbinden.

Diese Art der Verbindung ist in mehrfacher Hinsicht vorteilhaft. Sie kann einerseits besonders kostengünstig sein, da sie durch einfache Bolzen hergestellt werden kann. Zusätzliche Verbindungselemente zum Hintergreifen von Schienenlippen sind hingegen nicht notwendig. Darüber hinaus können besonders hohe Kräfte übertragen werden, da die Kraftübertragung formschlüssig an der die Bolzen umgebenden Lochlaibung erfolgt. Die Verbindung ist darüber hinaus besonders einfach herstellbar, da es im Gegensatz zu einer reibungsbasierten Verbindung an den Schienenlippen einer C-Profilschiene nicht auf die Vorspannkraft an der Verbindung ankommt und somit vorzugsweise eine Vorspannkraftkontrolle mit einem Drehmomentschlüssel entfallen kann. Da die Horizontalprofilschiene in die Vertikalprofilschienen eingeschoben ist, sind im Vergleich zu seitlich anliegenden Befestigungen besonders geringe Biegespannungen gegeben, was die Tragfähigkeit noch weiter verbessern kann. Durch das symmetrische Umgreifen der Horizontalprofilschiene von den beiden U-Profilbereichen der Vertikalprofilschienen kann die Lastübertragung von der Horizontalprofilschiene auf die Vertikalprofilschienen in besonderes einfacher Weise symmetrisch erfolgen, so dass die Tragfähigkeit der, vorzugsweise offenen Schienen, besonders gut genutzt werden kann.

Die Montagestruktur kann zum Befestigen der zumindest einen Leitung an einem Untergrund und insbesondere zum Befestigen der Leitung in Gebäuden dienen, das heisst der Untergrund, an welchem die beiden Vertikalprofilschienen befestigt werden, ist zweckmässigerweise ein Gebäudeteil. Die zumindest eine Leitung kann beispielsweise eine Rohrleitung, insbesondere zum Transport von Flüssigkeiten oder Luft, oder eine elektrische Leitung, insbesondere ein Kabel, sein.

Die Vertikalprofilschienen verlaufen vorzugsweise zumindest annähernd in vertikaler Richtung und die Horizontalprofilschiene vorzugsweise zumindest annähernd in horizontaler Richtung. Zweckmässigerweise weist die Montagestruktur eine linke Konsole zur Befestigung der linken Vertikalprofilschiene am Untergrund und eine rechte Konsole zur Befestigung der rechten Vertikalprofilschiene am Untergrund auf. Bei einer Deckenmontage, also wenn der Untergrund eine Decke ist, sind die beiden Konsolen zweckmässigerweise oberseitig an der jeweiligen Vertikalprofilschiene angeordnet. Bei einer Bodenplattenmontage, also wenn der Untergrund eine Bodenplatte ist, sind die beiden Konsolen zweckmässigerweise unterseitig an der jeweiligen Vertikalprofilschiene angeordnet.

Die Horizontalprofilschiene dient zum Tragen der zumindest einen Leitung. Grundsätzlich könnte die Leitung unmittelbar auf der Horizontalprofilschiene aufliegen. Vorzugsweise trägt die Horizontalprofilschiene die zumindest eine Leitung jedoch mittelbar, beispielsweise über einen auf der Horizontalprofilschiene aufliegenden Kabelkanal, in welchen die Leitung eingelegt ist, oder über eine Rohrschelle, in welcher die Leitung aufgenommen ist, und welche ihrerseits an der Horizontalprofilschiene befestigt ist. Vorzugsweise kann die Rohrschelle an Schienenlippen der Horizontalprofilschiene befestigt sein.

Die Horizontalprofilschiene verläuft vorzugsweise rechtwinklig zur linken Vertikalprofilschiene und zur rechten Vertikalprofilschiene. Insbesondere kann die Längsachse der Horizontalprofilschiene rechtwinklig zur Längsachse der linken Vertikalprofilschiene und zur Längsachse der rechten Vertikalprofilschiene verlaufen. Die beiden Vertikalprofilschienen und die Horizontalprofilschiene bilden zusammen insbesondere eine U-Form oder eine H-Form. Die linke Vertikalprofilschiene, die rechte Vertikalprofilschiene und die Horizontalprofilschiene sind vorzugsweise spiegelsymmetrisch ausgeführt, insbesondere zu einer Spiegelebene, welche die Horizontalprofilschiene rechtwinklig schneidet.

Die beiden Seitenwände der linken Vertikalprofilschiene und der Boden der linken Vertikalprofilschiene sind zweckmässigerweise einstückig ausgebildet. Die beiden Seitenwände der rechten Vertikalprofilschiene und der Boden der rechten Vertikalprofilschiene sind zweckmässigerweise einstückig ausgebildet. Die beiden Seitenwände der Horizontalprofilschiene, der Boden der Horizontalprofilschiene sowie gegebenenfalls vorhandene Schienenlippen der Horizontalprofilschiene sind zweckmässigerweise einstückig ausgebildet.

Die linke Vertikalprofilschiene, die rechte Vertikalprofilschiene und/oder die Horizontalprofilschiene bestehen vorzugsweise aus Metall, insbesondere aus Stahl.

Die Vertikalprofilschienen können jeweils ein U-Profil oder beispielsweise auch ein Hutprofil aufweisen, wobei im letztgenannten Fall an den Seitenwänden jeweils noch ein nach aussen vorragender Flansch vorgesehen ist.

In der linken Überlappungszone kann die Horizontalprofilschiene auch mit ihrem Boden zwischen die erste Seitenwand der linken Vertikalprofilschiene und die zweite Seitenwand der linken Vertikalprofilschiene ragen. Ebenso kann in der rechten Überlappungszone die Horizontalprofilschiene auch mit ihrem Boden zwischen die erste Seitenwand der rechten Vertikalprofilschiene und die zweite Seitenwand der rechten Vertikalprofilschiene ragen. Dies kann im Hinblick auf den Herstellungsaufwand vorteilhaft sein.

Besonders vorteilhaft ist es, dass die erste Seitenwand der Horizontalprofilschiene an der ersten Seitenwand der linken Vertikalprofilschiene anliegt, dass die zweite Seitenwand der Horizontalprofilschiene an der zweiten Seitenwand der linken Vertikalprofilschiene anliegt, dass die erste Seitenwand der Horizontalprofilschiene an der ersten Seitenwand der rechten Vertikalprofilschiene anliegt und/oder dass die zweite Seitenwand der Horizontalprofilschiene an der zweiten Seitenwand der rechten Vertikalprofilschiene anliegt. Durch diesen unmittelbaren Kontakt der jeweiligen Seitenwände ist bei besonders geringem Aufwand eine besonders gute Kraftübertragung und eine besonders hohe Stabilität möglich.

Vorzugsweise ist die Horizontalprofilschiene an zumindest einem Teil der Befestigungsstellen mit den Vertikalprofilschienen zweifach vertikal übereinander verbolzt. Es ist besonders bevorzugt, dass in der linken Überlappungszone die Horizontalprofilschiene mit der ersten Seitenwand der linken Vertikalprofilschiene zumindest zweifach vertikal übereinander verbolzt ist und, vorzugsweise, dass, insbesondere separat, das heisst mittels separater Bolzen, in der linken Überlappungszone die Horizontalprofilschiene mit der zweiten Seitenwand der linken Vertikalprofilschiene zumindest zweifach vertikal übereinander verbolzt ist. Es sind also an zumindest einer Seite, vorzugsweise an beiden Seiten, zumindest zwei Bolzen vorgesehen, die vertikal versetzt zueinander angeordnet sind. Dies kann die Biegemomentaufnahme noch weiter verbessern. Die beiden Bolzen befinden sich zweckmässigerweise an derselben horizontalen Position, können aber auch horizontal zueinander versetzt sein. Analog kann vorzugsweise vorgesehen werden, dass in der rechten Überlappungszone die Horizontalprofilschiene mit der ersten Seitenwand der rechten Vertikalprofilschiene zumindest zweifach vertikal übereinander verbolzt ist und, vorzugsweise, dass, insbesondere separat, das heisst mittels separater Bolzen, in der rechten Überlappungszone die Horizontalprofilschiene mit der zweiten Seitenwand der rechten Vertikalprofilschiene zumindest zweifach vertikal übereinander verbolzt ist. Die Verwendung separater Bolzen kann den Herstellungsund Montageaufwand reduzieren und in besonders einfacher Weise besonders gute Verbindungen zur Verfügung stellen.

Es ist besonders zweckmässig, dass in der linken Überlappungszone die erste Seitenwand der Horizontalprofilschiene mit der ersten Seitenwand der linken Vertikalprofilschiene verbolzt ist und dass, vorzugsweise separat, das heisst mittels zumindest eines separaten Bolzens, in der linken Überlappungszone die zweite Seitenwand der Horizontalprofilschiene mit der zweiten Seitenwand der linken Vertikalprofilschiene verbolzt ist. Es ist also eine Bolzenverbindung an gegenüberliegenden Seitenwänden gegeben, wodurch die Kraftübertragung noch weiter verbessert werden kann. Insbesondere kommen hierfür separate Bolzen zum Einsatz, was die Herstellung und die Montage vereinfachen kann.

Unter anderem aus denselben Gründen kann vorzugsweise vorgesehen werden, dass in der rechten Überlappungszone die erste Seitenwand der Horizontalprofilschiene mit der ersten Seitenwand der rechten Vertikalprofilschiene verbolzt ist und dass, vorzugsweise separat, das heisst mittels zumindest eines separaten Bolzens, in der rechten Überlappungszone die zweite Seitenwand der Horizontalprofilschiene mit der zweiten Seitenwand der rechten Vertikalprofilschiene verbolzt ist.

Besonders vorteilhaft ist es, dass in der linken Überlappungszone die erste Seitenwand der Horizontalprofilschiene mit der ersten Seitenwand der linken Vertikalprofilschiene zumindest einfach verbolzt ist, und dass, vorzugsweise separat, also mittels separater Bolzen, in der linken Überlappungszone die zweite Seitenwand der Horizontalprofilschiene mit der zweiten Seitenwand der linken Vertikalprofilschiene zumindest zweifach vertikal übereinander verbolzt. Es sind also an zumindest der zweiten Seite die beiden Seitenwände mittels zweier Bolzen, die vertikal versetzt zueinander angeordnet sind, miteinander verbunden. Dies kann die Biegemomentaufnahme noch weiter verbessern. Die beiden Bolzen befinden sich zweckmässigerweise an derselben horizontalen Position, können aber auch horizontal zueinander versetzt sein. Analog kann vorzugsweise vorgesehen werden, dass in der rechten Überlappungszone die erste Seitenwand der Horizontalprofilschiene mit der ersten Seitenwand der rechten Vertikalprofilschiene zumindest einfach verbolzt ist, und dass, vorzugsweise separat, in der rechten Überlappungszone die zweite Seitenwand der Horizontalprofilschiene mit der zweiten Seitenwand der rechten Vertikalprofilschiene zumindest zweifach vertikal übereinander verbolzt ist. Auch dies kann die Biegemomentaufnahme noch weiter verbessern, wobei zusätzlich eine besonders gute Kraftsymmetrie gegeben ist.

Eine weitere bevorzugte Ausgestaltung der Erfindung liegt darin, dass in der linken Überlappungszone die erste Seitenwand der Horizontalprofilschiene mit der ersten Seitenwand der linken Vertikalprofilschiene zumindest zweifach vertikal übereinander verbolzt ist, und dass, vorzugsweise separat, also mittels separater Bolzen, in der linken Überlappungszone die zweite Seitenwand der Horizontalprofilschiene mit der zweiten Seitenwand der linken Vertikalprofilschiene zumindest zweifach vertikal übereinander verbolzt ist. Demgemäss ist in der linken Überlappungszone eine zweifach doppelte Verbolzung gegeben, was die Kraftübertragung noch weiter verbessern kann. Insbesondere kann diese Lösung in konstruktiv einfacher Weise dann vorgesehen werden, wenn die Horizontalprofilschiene ein nach oben oder unten offenes C-Profil aufweist. Analog kann zweckmässigerweise vorgesehen werden, dass in der rechten Überlappungszone die erste Seitenwand der Horizontalprofilschiene mit der ersten Seitenwand der rechten Vertikalprofilschiene zumindest zweifach vertikal übereinander verbolzt ist. Zweckmässigerweise ist, vorzugsweise separat, in der rechten Überlappungszone auch die zweite Seitenwand der Horizontalprofilschiene mit der zweiten Seitenwand der rechten Vertikalprofilschiene zumindest zweifach vertikal übereinander verbolzt. Auch dies kann die Kraftübertragung noch weiter verbessern.

Erfindungsgemäss sind bestimmte Strukturen miteinander verbolzt. In fachüblicher Weise soll hierunter insbesondere verstanden werden, dass diese Strukturen mittels Bolzen miteinander verbunden sind. Grundsätzlich könnten die verwendeten Bolzen gewindelos sein. Besonders bevorzugt ist es aber, dass die Strukturen mittels Schraubbolzen verbolzt sind, was im Hinblick auf die Montage und die Zuverlässigkeit vorteilhaft sein kann.

Weiterhin ist es besonders bevorzugt, dass die erste Seitenwand der Horizontalprofilschiene, die zweite Seitenwand der Horizontalprofilschiene, die erste Seitenwand der linken Vertikalprofilschiene, die zweite Seitenwand der linken Vertikalprofilschiene, die erste Seitenwand der rechten Vertikalprofilschiene und/oder die zweite Seitenwand der rechten Vertikalprofilschiene jeweils ein, vorzugsweise regelmässiges, Lochraster aufweisen. Insbesondere kann vorgesehen werden, dass die erste Seitenwand der Horizontalprofilschiene und die zweite Seitenwand der Horizontalprofilschiene jeweils ein mehrreihiges, beispielsweise doppelreihiges, Lochraster aufweisen. Hierdurch können die beschriebenen Verbolzungen in besonders einfacher Weise hergestellt werden.

Die erste Seitenwand und die zweite Seitenwand der linken Vertikalprofilschiene weisen zweckmässigerweise dieselbe Höhe auf, wobei die Höhen insbesondere ausgehend vom Boden der linken Vertikalprofilschiene gemessen werden. Die erste Seitenwand und die zweite Seitenwand der rechten Vertikalprofilschiene weisen zweckmässigerweise dieselbe Höhe auf, wobei die Höhen insbesondere ausgehend vom Boden der rechten Vertikalprofilschiene gemessen werden. Die linke und die rechte Vertikalprofilschiene sind vorzugsweise baugleich ausgeführt, was im Hinblick auf Lagerhaltungskosten vorteilhaft sein kann. Die erste Seitenwand und die zweite Seitenwand der Horizontalprofilschiene können dieselbe Höhe aufweisen, wobei die Höhen insbesondere ausgehend vom Boden der Horizontalprofilschiene gemessen werden, oder sie können unterschiedliche Höhen aufweisen, beispielsweise wenn die Horizontalprofilschiene ein seitlich offenes C-Profil aufweist.

Bevorzugt ist es, dass die Horizontalprofilschiene ein C-Profil oder ein Kastenprofil aufweist. Bei einer solchen Ausgestaltung können die vertikalen Lasten, die durch die Auflage von Leitungen erzeugt werden, besonders gut aufgenommen werden. Eine Ausgestaltung mit einem C-Profil kann besonders bevorzugt sein, da diese zusätzlich zur besonders guten vertikalen Lastaufnahme eine besonders einfache und variable Befestigung von Anbauteilen erlaubt, und/oder da der Materialaufwand besonders gering sein kann. Der Schlitz des C-Profils ist vorzugsweise oben oder unten an der Horizontalprofilschiene vorgesehen, was eine besonders symmetrische Kraftaufnahme ermöglicht. Insbesondere bei asymmetrischen Anordnungen kann der Schlitz auch seitlich, also entweder den ersten Seitenwänden der Vertikalprofilschienen oder den zweiten Seitenwänden der Vertikalprofilschienen zugewandt, vorgesehen werden.

Besonders bevorzugt ist es, dass die Horizontalprofilschiene eine erste Schienenlippe und eine zweite Schienenlippe aufweist. Insbesondere steht die erste Schienenlippe von der ersten Seitenwand der Horizontalprofilschiene zur zweiten Schienenlippe und/oder zur zweiten Seitenwand der Horizontalprofilschiene hin vor, und die zweite Schienenlippe steht von der zweiten Seitenwand der Horizontalprofilschiene zur ersten Schienenlippe und/oder zur ersten Seitenwand der Horizontalprofilschiene hin vor. Hierdurch wird ein C-Profil erhalten.

Zwischen den beiden Schienenlippen ist der Schlitz des C-Profils ausgebildet, das heisst die beiden Schienenlippen sind insbesondere voneinander beabstandet. An dem Schlitz können insbesondere Anbauteile zum Halten der Leitung festgelegt werden. Die beiden Schienenlippen sind vorzugsweise oben oder unten an der Horizontalprofilschiene ausgebildet.

Die Erfindung wird nachfolgend anhand bevorzugter Ausführungsbeispiele näher erläutert, die schematisch in den beiliegenden Figuren dargestellt sind, wobei einzelne Merkmale der nachfolgend beschriebenen Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer ersten Ausführungsform einer erfindungsgemässen Montagestruktur;
- Figur 2:: eine erste Schnittansicht der Montagestruktur aus Figur 1, nämlich durch die Horizontalprofilschiene mit Blick auf die linke Vertikalprofilschiene;
- Figur 3:: eine zweite Schnittansicht der Montagestruktur aus Figur 1, nämlich durch die rechte Vertikalprofilschiene mit Blick auf die Horizontalprofilschiene;
- Figur 4:: eine Ansicht auf die Rückseite der Montagestruktur aus Figur 1, wobei in Figur 4 auch noch eine Leitung angedeutet ist, die von der Montagestruktur getragen wird;
- Figur 5:: eine vergrösserte Ansicht der Montagestruktur aus Figur 1 im Bereich rechten Überlappungszone;
- Figur 6:: eine perspektivische Darstellung, analog der Figur 1, einer zweiten Ausführungsform einer erfindungsgemässen Montagestruktur;
- Figur 7:: eine perspektivische Darstellung, analog der Figur 1, einer dritten Ausführungsform einer erfindungsgemässen Montagestruktur;
- Figur 8:: eine erste Schnittansicht, analog der Figur 2, der Montagestruktur aus Figur 7;
- Figur 9:: eine zweite Schnittansicht, analog der Figur 3, der Montagestruktur aus Figur 7;
- Figur 10:: eine perspektivische Darstellung, analog der Figur 1, einer vierten Ausführungsform einer erfindungsgemässen Montagestruktur;
- Figur 11:: eine Schnittansicht, analog der Figur 2, der Montagestruktur aus Figur 10; und
- Figur 12:: eine vergrösserte Ansicht, analog der Figur 5, der Montagestruktur aus Figur 10.

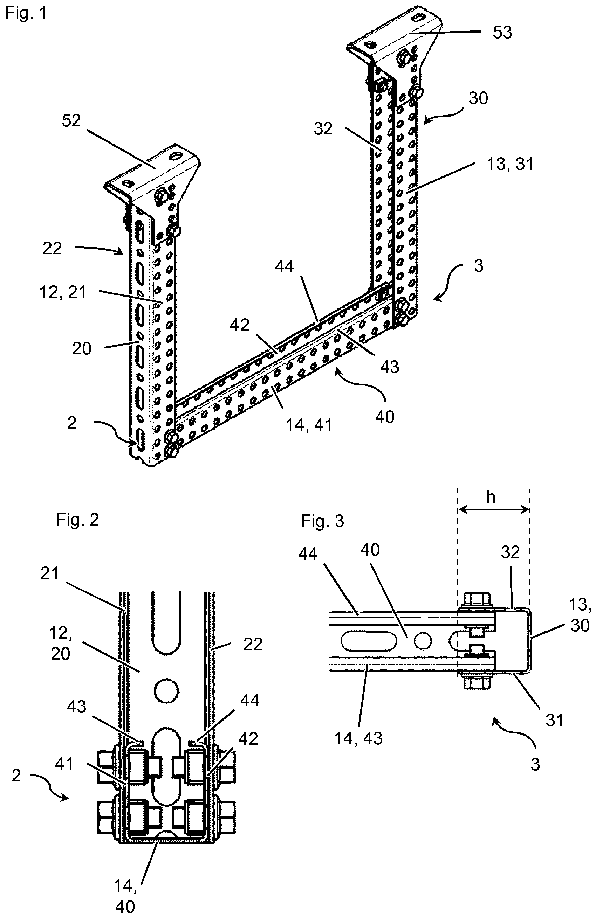

Ein erstes Ausführungsbeispiel einer Montagestruktur für zumindest eine Leitung 91 ist in den Figuren 1 bis 5 gezeigt. Die Montagestruktur weist eine linke Vertikalprofilschiene 12, eine rechte Vertikalprofilschiene 13 und eine Horizontalprofilschiene 14 auf, welche sich zwischen der linken Vertikalprofilschiene 12 und der rechten Vertikalprofilschiene 13 erstreckt, und welche die linke Vertikalprofilschiene 12 mit der rechten Vertikalprofilschiene 13 verbindet. Die beiden Vertikalprofilschienen 12 und 13 verlaufen parallel zueinander. Die Horizontalprofilschiene 14 verläuft senkrecht zu den beiden Vertikalprofilschienen 12 und 13. Die beiden Vertikalprofilschienen 12 und 13 und die Horizontalprofilschiene 14 bilden somit zusammen eine H-Form oder - wie im Falle des Ausführungsbeispiels der Figuren 1 bis 5 - eine U-Form.

Die linke Vertikalprofilschiene 12 weist eine erste Seitenwand 21, eine zweite Seitenwand 22 und einen Boden 20 auf, welcher die erste Seitenwand 21 der linken Vertikalprofilschiene 12 mit der zweiten Seitenwand 22 der linken Vertikalprofilschiene 12 verbindet. Ebenso weist die rechte Vertikalprofilschiene 13 eine ersten Seitenwand 31, eine zweite Seitenwand 32 und einen Boden 30 auf, welcher die erste Seitenwand 31 der rechten Vertikalprofilschiene 13 mit der zweiten Seitenwand 32 der rechten Vertikalprofilschiene 13 verbindet. Die linke Vertikalprofilschiene 12 und die rechte Vertikalprofilschiene 13 sind U-Profilschienen. Auch die Horizontalprofilschiene 14 weist eine erste Seitenwand 41, eine zweite Seitenwand 42 und einen Boden 40 auf, welcher die erste Seitenwand 41 der Horizontalprofilschiene 14 mit der zweiten Seitenwand 42 der Horizontalprofilschiene 14 verbindet. Die Horizontalprofilschiene 14 ist eine C-Profilschiene und weist also solche noch eine erste Schienenlippe 43 und eine zweite Schienenlippe 44 auf. Die erste Schienenlippe 43 ist an der ersten Seitenwand 41 der Horizontalprofilschiene 14 angeordnet und steht von der ersten Seitenwand 41 der Horizontalprofilschiene 14 zur zweiten Schienenlippe 44 und zur zweiten Seitenwand 42 der Horizontalprofilschiene 14 hin vor. Die zweite Schienenlippe 44 ist an der zweiten Seitenwand 42 der Horizontalprofilschiene 14 angeordnet und steht von der zweiten Seitenwand 42 der Horizontalprofilschiene 14 zur ersten Schienenlippe 43 und zur ersten Seitenwand 41 der Horizontalprofilschiene 14 hin vor. Der Boden 40 und die erste Schienenlippe 43 befinden sich an entgegengesetzten Längsseiten der ersten Seitenwand 41. Der Boden 40 und die zweite Schienenlippe 44 befinden sich an entgegengesetzten Längsseiten der zweiten Seitenwand 42.

Der Boden 20, die erste Seitenwand 21 und die zweite Seitenwand 22 der linken Vertikalprofilschiene 12 sind einstückig ausgebildet. Der Boden 30, die erste Seitenwand 31 und die zweite Seitenwand 32 der rechten Vertikalprofilschiene 13 sind ebenfalls einstückig ausgebildet. Auch der Boden 40, die erste Seitenwand 41, die zweite Seitenwand 42, die erste Schienenlippe 43 und die zweite Schienenlippe 44 der Horizontalprofilschiene 14 sind einstückig ausgebildet.

Die beiden Seitenwände 21 und 22 der linken Vertikalprofilschiene 12 verlaufen parallel zueinander und rechtwinklig zum Boden 20 der linken Vertikalprofilschiene 12. Die beiden Seitenwände 31 und 32 der rechten Vertikalprofilschiene 13 verlaufen parallel zueinander und rechtwinklig zum Boden 30 der rechten Vertikalprofilschiene 13. Die beiden Seitenwände 41 und 42 der Horizontalprofilschiene 14 verlaufen parallel zueinander und rechtwinklig zum Boden 40 der Horizontalprofilschiene 14. Zweckmässigerweise verlaufen sowohl die beiden Seitenwände 21 und 22 der linken Vertikalprofilschiene 12, als auch die beiden Seitenwände 31 und 32 der rechten Vertikalprofilschiene 13, als auch die beiden Seitenwände 41 und 42 der Horizontalprofilschiene 14 parallel zueinander. Der Boden 20 der linken Vertikalprofilschiene 12 ist an der der rechten Vertikalprofilschiene 13 abgewandten Seite der linken Vertikalprofilschiene 12 angeordnet, das heisst das durch die beiden Seitenwände 21 und 22 und den Boden 20 der linken Vertikalprofilschiene 12 gebildete U-Profil ist zur rechten Vertikalprofilschiene 13 hin offen. Der Boden 30 der rechten Vertikalprofilschiene 13 ist an der der linken Vertikalprofilschiene 12 abgewandten Seite der rechten Vertikalprofilschiene 13 angeordnet, das heisst das durch die beiden Seitenwände 31 und 32 und den Boden 30 der rechten Vertikalprofilschiene 13 gebildete U-Profil ist zur linken Vertikalprofilschiene 12 hin offen.

Die erste Seitenwand 31 und die zweite Seitenwand 32 der rechten Vertikalprofilschiene 13 weisen dieselbe Höhe auf. Dies ist insbesondere in Figur 3 erkennbar, wo diese Höhe mit dem Bezugszeichen "h" gekennzeichnet ist. Auch die erste Seitenwand 21 und die zweite Seitenwand 22 der linken Vertikalprofilschiene 12 weisen dieselbe Höhe auf, die hier auch noch gleich der Höhe der ersten Seitenwand 31 und der zweiten Seitenwand 32 des rechten Vertikalprofilschiene 13 ist. Insbesondere sind die linke Vertikalprofilschiene 12 und die rechte Vertikalprofilschiene 13 baugleich ausgebildet.

Wie insbesondere in Figur 2 erkennbar ist, weisen auch die erste Seitenwand 41 und die zweite Seitenwand 42 der Horizontalprofilschiene 14 dieselbe Höhe auf.

Die Horizontalprofilschiene 14 ist an ihrem linken Ende mit der linken Vertikalprofilschiene 12 und an ihrem dem linken Ende gegenüberliegenden rechten Ende mit der rechten Vertikalprofilschiene 13 verbunden. Insbesondere ist die Horizontalprofilschiene 14 an ihren Enden in die beiden Vertikalprofilschienen 12 und 13 eingeführt. Somit ragen die beiden Seitenwände 41 und 42 der Horizontalprofilschiene 14 am linken Ende der Horizontalprofilschiene 14 in einer linken Überlappungszone 2 zwischen die beiden Seitenwände 21 und 22 der linken Vertikalprofilschiene 12 und am rechten Ende der Horizontalprofilschiene 14 in einer rechten Überlappungszone 3 zwischen die beiden Seitenwände 31 und 32 der rechten Vertikalprofilschiene 13.

In der linken Überlappungszone 2 liegt die erste Seitenwand 41 der Horizontalprofilschiene 14 innenseitig an der ersten Seitenwand 21 der linken Vertikalprofilschiene 12 und die zweite Seitenwand 42 der Horizontalprofilschiene 14 innenseitig an der zweiten Seitenwand 22 der linken Vertikalprofilschiene 12 an. Analog liegt in der rechten Überlappungszone 3 die erste Seitenwand 41 der Horizontalprofilschiene 14 innenseitig an der ersten Seitenwand 31 der rechten Vertikalprofilschiene 13 und die zweite Seitenwand 42 der Horizontalprofilschiene 14 innenseitig an der zweiten Seitenwand 32 der rechten Vertikalprofilschiene 13 an.

In der linken Überlappungszone 2 ist die Horizontalprofilschiene 14 mit der linken Vertikalprofilschiene 12 verbolzt. Insbesondere ist die erste Seitenwand 41 der Horizontalprofilschiene 14 mit der ersten Seitenwand 21 der linken Vertikalprofilschiene 12 mittels zweier vertikal übereinanderliegender Bolzen verbolzt und die zweite Seitenwand 42 der Horizontalprofilschiene 14 mit der zweiten Seitenwand 22 der linken Vertikalprofilschiene 12 mittels zweier weiterer, vertikal übereinanderliegender Bolzen verbolzt. Analog ist in der rechten Überlappungszone 3 die Horizontalprofilschiene 14 mit der rechten Vertikalprofilschiene 13 verbolzt. Insbesondere ist erste Seitenwand 41 der Horizontalprofilschiene 14 mit der ersten Seitenwand 31 der rechten Vertikalprofilschiene 13 mittels zweier vertikal übereinanderliegender Bolzen verbolzt und die zweite Seitenwand 42 der Horizontalprofilschiene 14 mit der zweiten Seitenwand 32 der rechten Vertikalprofilschiene 13 mittels zweier weiterer, vertikal übereinanderliegender Bolzen verbolzt.

Die Montagestruktur weist ferner eine linke Konsole 52 und eine rechte Konsole 53 auf. Die linke Konsole 52 ist an der linken Vertikalprofilschiene 12 angeordnet und dient zum Montieren der linken Vertikalprofilschiene 12 am Untergrund. Die rechte Konsole 53 ist an der rechten Vertikalprofilschiene 13 angeordnet und dient zum Montieren der rechten Vertikalprofilschiene 13 am Untergrund. Im dargestellten Ausführungsbeispiel ist die linke Konsole 52 U-förmig ausgebildet und sie umgreift die zugehörige linke Vertikalprofilschiene 12, und die rechte Konsole 53 ist U-förmig ausgebildet und sie umgreift die zugehörige rechte Vertikalprofilschiene 13. Insbesondere ist die linke Konsole 52 mit der ersten Seitenwand 21 und der zweiten Seitenwand 22 der linken Vertikalprofilschiene 12 verbolzt und die rechte Konsole 53 ist mit der ersten Seitenwand 31 und der zweiten Seitenwand 32 der rechten Vertikalprofilschiene 13 verbolzt.

Die Seitenwände 21, 31, 41, 22, 32 und 42 weisen jeweils ein, vorzugsweise mehrreihiges, insbesondere doppelreihiges, Lochraster auf. Durch diese Lochraster sind die einzelnen Bolzen durchgeführt. Die verwendeten Bolzen sind hier in allen Fällen als Schraubbolzen ausgeführt.

Im dargestellten Ausführungsbeispiel sind die beiden Konsolen 52 und 53 am oberen Endbereich der zugehörigen Vertikalprofilschienen 12 beziehungsweise 13 angeordnet, und die Horizontalprofilschiene 14 befindet sich unterhalb der beiden Konsolen 52 und 53. Diese Anordnung ist für eine Deckenmontage der Montagestruktur vorgesehen. Es ist aber auch eine Bodenplattenmontage möglich. Im Falle eine Bodenplattenmontage wären die beiden Konsolen 52 und 53 am unteren Endbereich der zugehörigen Vertikalprofilschienen 12 beziehungsweise 13 angeordnet, und die Horizontalprofilschiene 14 befände sich oberhalb der beiden Konsolen 52 und 53.

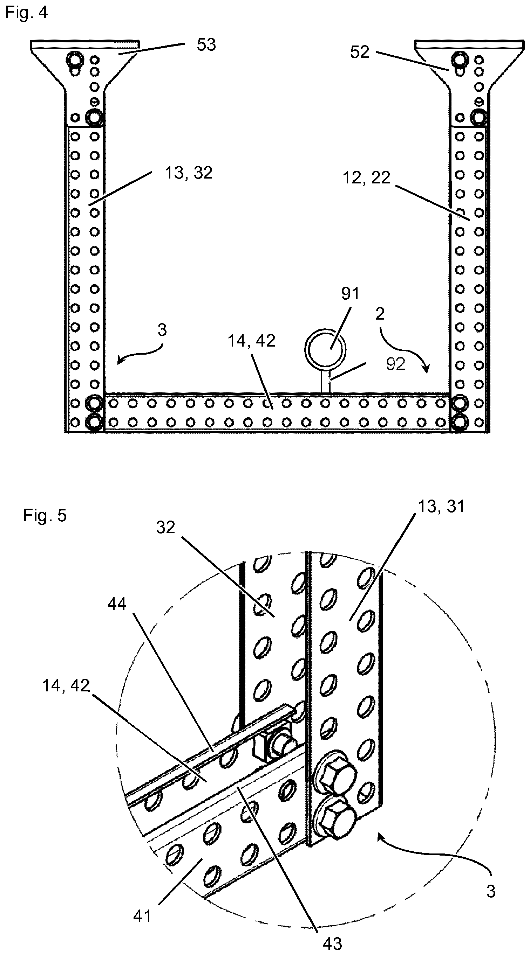

Zwischen den beiden Schienenlippen 43 und 44 ist ein Schlitz gebildet. Die beiden Schienenlippen 43 und 44 sind hier zweckmässigerweise oben an der Horizontalprofilschiene 14 angeordnet. Sie könnten aber auch unten an der Horizontalprofilschiene 14 angeordnet sein. Die zumindest eine Leitung 91, welche beispielsweise eine Rohrleitung oder ein Kabel ist, ist auf die Horizontalprofilschiene 14 aufgelegt oder von der Horizontalprofilschiene 14 abgehängt. Im vorliegenden Ausführungsbeispiel ist sie auf die Horizontalprofilschiene 14 aufgelegt, und zwar mittels einer nur in Figur 4 angedeuteten Rohrschelle 92, die an den Schienenlippen 43 und 44 festgelegt ist.

Die in den weiteren Figuren dargestellten Ausführungsformen realisieren eine Reihe von Merkmalen der Ausführungsform der Figuren 1 bis 5 in analoger Weise, so dass die obenstehende Beschreibung analog angewandt werden kann, und im Folgenden nur auf Unterschiede eingegangen wird.

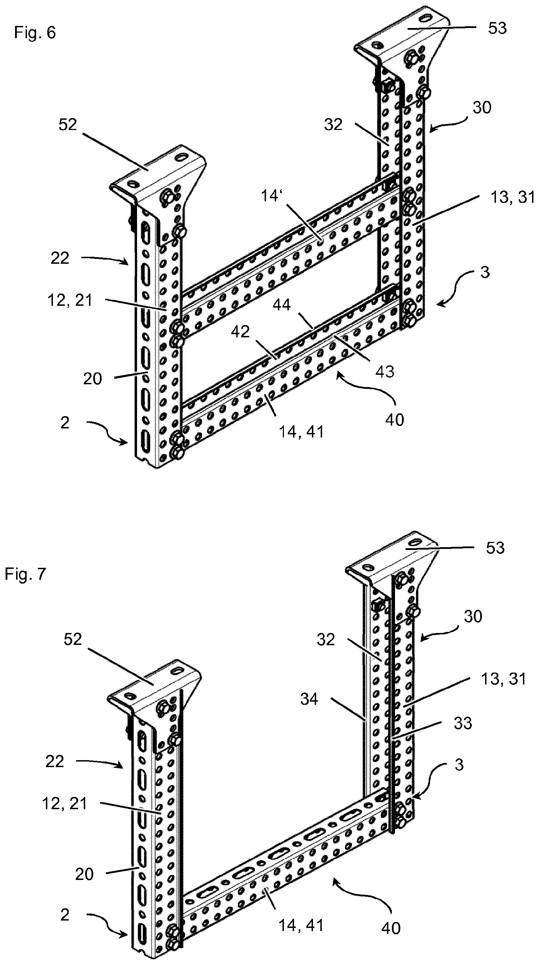

Die in Figur 6 dargestellte zweite Ausführungsform unterscheidet sich von der ersten Ausführungsform gemäss Figuren 1 bis 5 durch eine zusätzliche Horizontalprofilschiene 14', welche in vertikaler Richtung zwischen den Konsolen 52 und 53 einerseits und der ersten Horizontalprofilschiene 14 andererseits angeordnet ist, insbesondere oberhalb der ersten Horizontalprofilschiene 14. Die zusätzliche Horizontalprofilschiene 14' ist analog der ersten Horizontalprofilschiene 14 ausgeführt und an den Vertikalprofilschienen 12 und 13 befestigt.

Die in den Figuren 7 bis 9 dargestellte dritte Ausführungsform unterscheidet sich von der ersten Ausführungsform gemäss Figuren 1 bis 5 durch die Querschnittsformen der Profilschienen 12, 13 und 14.

Insbesondere bildet die Horizontalprofilschiene 14 im Gegensatz zu den vorherigen Ausführungsformen kein C-Profil, sondern ein geschlossenes Kastenprofil. Die beiden Vertikalprofilschienen 12 und 13 sind hier als Hutprofile ausgebildet. Als solche weisen sie jeweils noch zwei Flansche auf, die von den jeweiligen Seitenwänden vorstehen. Im Falle der rechten Vertikalprofilschiene 13 sind diese Flansche in den Figuren mit den Bezugszeichen 33 und 34 gekennzeichnet.

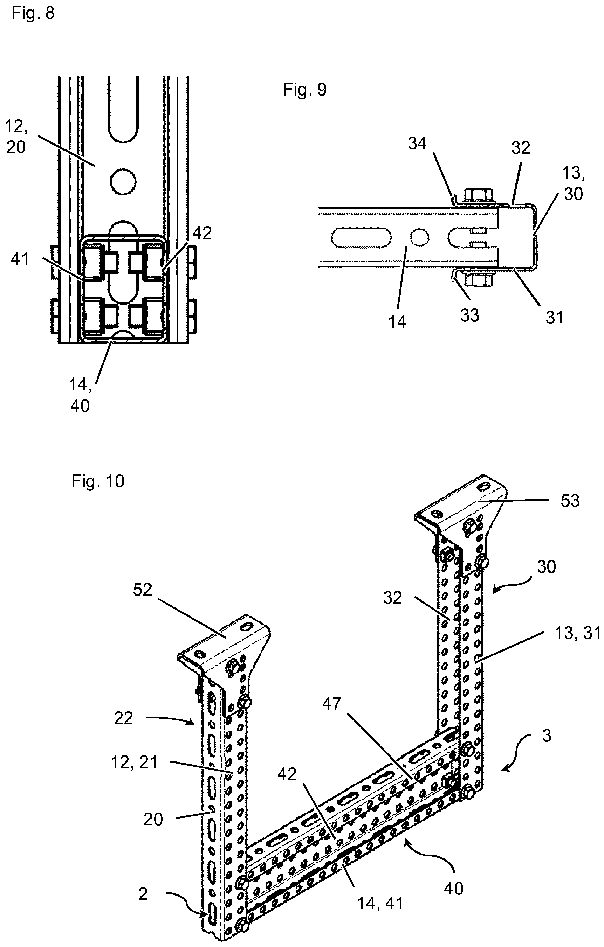

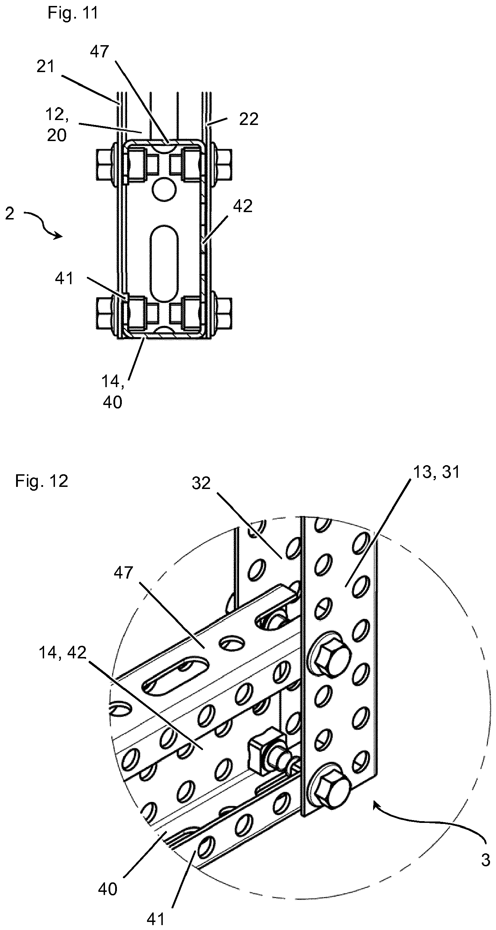

Eine vierte Ausführungsform ist in den Figuren 10 bis 12 gezeigt. Die vierte Ausführungsform unterscheidet sich von der ersten Ausführungsform durch den Querschnitt der Horizontalprofilschiene 14. Insbesondere ist bei der vierten Ausführungsform gemäss Figuren 10 bis 12 die zweite Seitenwand 42 der Horizontalprofilschiene 14 deutlich höher als die erste Seitenwand 41 der Horizontalprofilschiene 14, und an der dem Boden 40 abgewandten Längsseite der zweiten Seitenwand 42 ist noch, vorzugsweise einstückig mit der zweiten Seitenwand 42, ein L-förmiger Flansch 47 angeordnet. Somit weist die Horizontalprofilschiene 14 ein C-Profil mit seitlich angeordnetem, insbesondere den ersten Seitenwänden 21 und 31 der Vertikalprofilschienen 12 beziehungsweise 13 benachbartem Schlitz auf.

Die höhere zweite Seitenwand 42 ist mit den Vertikalprofilschienen 12 und 13 jeweils zweifach vertikal übereinander verbolzt. Die weniger hohe erste Seitenwand 41 ist mit den Vertikalprofilschienen 12 und 13 hingegen jeweils nur einfach verbolzt, wobei jedoch zusätzliche vertikal versetzte zweite Bolzenverbindungen am L-förmigen Flansch 47 gegeben sind. Insbesondere ist der L-förmige Flansch 47 mit der ersten Seitenwand 21 der linken Vertikalprofilschiene 12 und mit der ersten Seitenwand 31 der rechten Vertikalprofilschiene 13 verbolzt.

## Patentansprüche

1. Montagestruktur für zumindest eine Leitung (91), aufweisend
- eine linke Vertikalprofilschiene (12),
- eine rechte Vertikalprofilschiene (13), und
- zumindest eine Horizontalprofilschiene (14) zum Tragen der Leitung (91), wobei die Horizontalprofilschiene (14) die linke Vertikalprofilschiene (12) und die rechte Vertikalprofilschiene (13) verbindet,
- wobei die linke Vertikalprofilschiene (12) eine erste Seitenwand (21), eine zweite Seitenwand (22) und einen Boden (20) aufweist, welcher die erste Seitenwand (21) der linken Vertikalprofilschiene (12) und die zweite Seitenwand (22) der linken Vertikalprofilschiene (12) verbindet,
- wobei die rechte Vertikalprofilschiene (13) eine erste Seitenwand (31), eine zweite Seitenwand (32) und einen Boden (30) aufweist, welcher die erste Seitenwand (31) der rechten Vertikalprofilschiene (13) und die zweite Seitenwand (32) der rechten Vertikalprofilschiene (13) verbindet,
- wobei die Horizontalprofilschiene (14) eine erste Seitenwand (41), eine zweite Seitenwand (42) und einen Boden (40) aufweist, welcher die erste Seitenwand (41) der Horizontalprofilschiene (14) und die zweite Seitenwand (42) der Horizontalprofilschiene (14) verbindet,
- wobei die Horizontalprofilschiene (14) in einer linken Überlappungszone (2) mit ihrer ersten Seitenwand (41) und mit ihrer zweiten Seitenwand (42) zwischen die erste Seitenwand (21) der linken Vertikalprofilschiene (12) und die zweite Seitenwand (22) der linken Vertikalprofilschiene (12) ragt und in der linken Überlappungszone (2) mit der linken Vertikalprofilschiene (12) verbolzt ist, und
- wobei die Horizontalprofilschiene (14) in einer rechten Überlappungszone (3) mit ihrer ersten Seitenwand (41) und mit ihrer zweiten Seitenwand (42) zwischen die erste Seitenwand (31) der rechten Vertikalprofilschiene (13) und die zweite Seitenwand (32) der rechten Vertikalprofilschiene (13) ragt und in der rechten Überlappungszone (3) mit der rechten Vertikalprofilschiene (13) verbolzt ist.

2. Montagestruktur nach Anspruch 1,
**dadurch gekennzeichnet,**
- **dass** die erste Seitenwand (41) der Horizontalprofilschiene (14) an der ersten Seitenwand (21) der linken Vertikalprofilschiene (12) anliegt, dass die zweite Seitenwand (42) der Horizontalprofilschiene (14) an der zweiten Seitenwand (22) der linken Vertikalprofilschiene (12) anliegt,
- **dass** die erste Seitenwand (41) der Horizontalprofilschiene (14) an der ersten Seitenwand (31) der rechten Vertikalprofilschiene (13) anliegt, und dass die zweite Seitenwand (42) der Horizontalprofilschiene (14) an der zweiten Seitenwand (32) der rechten Vertikalprofilschiene (13) anliegt.

3. Montagestruktur nach einem der vorstehenden Ansprüche,
**dadurch gekennzeichnet,**
- **dass** in der linken Überlappungszone (2) die Horizontalprofilschiene (14) mit der ersten Seitenwand (21) der linken Vertikalprofilschiene (12) zumindest zweifach vertikal übereinander verbolzt ist und dass, separat, in der linken Überlappungszone (2) die Horizontalprofilschiene (14) mit der zweiten Seitenwand (22) der linken Vertikalprofilschiene (12) zumindest zweifach vertikal übereinander verbolzt ist, und
- **dass** in der rechten Überlappungszone (3) die Horizontalprofilschiene (14) mit der ersten Seitenwand (31) der rechten Vertikalprofilschiene (13) zumindest zweifach vertikal übereinander verbolzt ist und dass, separat, in der rechten Überlappungszone (3) die Horizontalprofilschiene (14) mit der zweiten Seitenwand (32) der rechten Vertikalprofilschiene (13) zumindest zweifach vertikal übereinander verbolzt ist.

4. Montagestruktur nach einem der vorstehenden Ansprüche,
**dadurch gekennzeichnet,**
- **dass** in der linken Überlappungszone (2) die erste Seitenwand (41) der Horizontalprofilschiene (14) mit der ersten Seitenwand (21) der linken Vertikalprofilschiene (12) verbolzt ist und dass, separat, in der linken Überlappungszone (2) die zweite Seitenwand (42) der Horizontalprofilschiene (14) mit der zweiten Seitenwand (22) der linken Vertikalprofilschiene (12) verbolzt ist, und
- **dass** in der rechten Überlappungszone (3) die erste Seitenwand (41) der Horizontalprofilschiene (14) mit der ersten Seitenwand (31) der rechten Vertikalprofilschiene (13) verbolzt ist und dass, separat, in der rechten Überlappungszone (3) die zweite Seitenwand (42) der Horizontalprofilschiene (14) mit der zweiten Seitenwand (32) der rechten Vertikalprofilschiene (13) verbolzt ist.

5. Montagestruktur nach Anspruch 4,
**dadurch gekennzeichnet,**
- **dass** in der linken Überlappungszone (2) die erste Seitenwand (41) der Horizontalprofilschiene (14) mit der ersten Seitenwand (21) der linken Vertikalprofilschiene (12) zumindest einfach verbolzt ist und dass, separat, in der linken Überlappungszone (2) die zweite Seitenwand (42) der Horizontalprofilschiene (14) mit der zweiten Seitenwand (22) der linken Vertikalprofilschiene (12) zumindest zweifach vertikal übereinander verbolzt ist, und
- **dass** in der rechten Überlappungszone (3) die erste Seitenwand (41) der Horizontalprofilschiene (14) mit der ersten Seitenwand (31) der rechten Vertikalprofilschiene (13) zumindest einfach verbolzt ist und dass, separat, in der rechten Überlappungszone (3) die zweite Seitenwand (42) der Horizontalprofilschiene (14) mit der zweiten Seitenwand (32) der rechten Vertikalprofilschiene (13) zumindest zweifach vertikal übereinander verbolzt ist.

6. Montagestruktur nach Anspruch 5,
**dadurch gekennzeichnet,**
- **dass** in der linken Überlappungszone (2) die erste Seitenwand (41) der Horizontalprofilschiene (14) mit der ersten Seitenwand (21) der linken Vertikalprofilschiene (12) zumindest zweifach vertikal übereinander verbolzt ist und dass, separat, in der linken Überlappungszone (2) die zweite Seitenwand (42) der Horizontalprofilschiene (14) mit der zweiten Seitenwand (22) der linken Vertikalprofilschiene (12) zumindest zweifach vertikal übereinander verbolzt ist, und
- **dass** in der rechten Überlappungszone (3) die erste Seitenwand (41) der Horizontalprofilschiene (14) mit der ersten Seitenwand (31) der rechten Vertikalprofilschiene (13) zumindest zweifach vertikal übereinander verbolzt ist und dass, separat, in der rechten Überlappungszone (3) die zweite Seitenwand (42) der Horizontalprofilschiene (14) mit der zweiten Seitenwand (32) der rechten Vertikalprofilschiene (13) zumindest zweifach vertikal übereinander verbolzt ist.

7. Montagestruktur nach einem der vorstehenden Ansprüche,
**dadurch gekennzeichnet,**
**dass** die erste Seitenwand (41) der Horizontalprofilschiene (14), die zweite Seitenwand (42) der Horizontalprofilschiene (14), die erste Seitenwand (21) der linken Vertikalprofilschiene (12), die zweite Seitenwand (22) der linken Vertikalprofilschiene (12), die erste Seitenwand (31) der rechten Vertikalprofilschiene (13) und die zweite Seitenwand (32) der rechten Vertikalprofilschiene (13) jeweils ein Lochraster aufweisen.

8. Montagestruktur nach einem der vorstehenden Ansprüche,
**dadurch gekennzeichnet,**
**dass** die erste Seitenwand (41) der Horizontalprofilschiene (14) und die zweite Seitenwand (42) der Horizontalprofilschiene (14) jeweils ein mehrreihiges Lochraster aufweisen.

9. Montagestruktur nach einem der vorstehenden Ansprüche,
**dadurch gekennzeichnet,**
**dass** die erste Seitenwand (21) und die zweite Seitenwand (22) der linken Vertikalprofilschiene (12) dieselbe Höhe aufweisen und dass die erste Seitenwand (31) und die zweite Seitenwand (32) der rechten Vertikalprofilschiene (13) dieselbe Höhe aufweisen.

10. Montagestruktur nach einem der vorstehenden Ansprüche,
**dadurch gekennzeichnet,**
**dass** die erste Seitenwand (41) und die zweite Seitenwand (42) der Horizontalprofilschiene (14) dieselbe Höhe aufweisen.

11. Montagestruktur nach einem der vorstehenden Ansprüche,
**dadurch gekennzeichnet,**
**dass** die Horizontalprofilschiene (14) ein C-Profil aufweist.

12. Montagestruktur nach einem der vorstehenden Ansprüche,
**dadurch gekennzeichnet,**
**dass** die Horizontalprofilschiene (14) eine erste Schienenlippe (43) und eine zweite Schienenlippe (44) aufweist, dass die erste Schienenlippe (43) von der ersten Seitenwand (41) der Horizontalprofilschiene (14) zur zweiten Schienenlippe (44) hin vorsteht und dass die zweite Schienenlippe (44) von der zweiten Seitenwand (42) der Horizontalprofilschiene (14) zur ersten Schienenlippe (43) hin vorsteht.
